# EUROPÄISCHE PATENTANMELDUNG

(11) **EP 1 875 793 A1**
(43) Veröffentlichungstag der Anmeldung: **09.01.2008**
(21) Anmeldenummer: 07106649.2
(22) Anmeldetag: 20.04.2007
(51) Int. Cl.: A01D 41/127, A01F 29/14

(54) **Antriebsystem einer landwirtschaftlichen Arbeitsmaschine**

(30) Priorität: 03.07.2006 DE 102006030971
(71) Anmelder: CLAAS Selbstfahrende Erntemaschinen GmbH, 33428 Harsewinkel (DE)
(72) Erfinder: Isfort, Heinrich, 48249, Dülmen (DE)

(57) **Zusammenfassung**

Die Erfindung betrifft ein Antriebssystem einer landwirtschaftlichen Arbeitsmaschine (1, 2) zur Aufnahmen und zum Häckseln von Erntegut (5), wobei der landwirtschaftlichen Arbeitsmaschine (1, 2) zumindest ein Vorsatzgerät (3) zur Aufnahme des Erntegutes (5) zugeordnet ist und diesem nachgeordnete als Einzugsorgane (9) ausgebildet Arbeitsorgane (20) das Erntegut (5) wenigstens einem als Häckseleinrichtung (12) ausgebildeten Arbeitsorgan (20) zuführen und wobei der Antriebsmotor (25) der landwirtschaftlichen Arbeitsmaschine (1, 2) mit einem Antriebsriemen (27) in Wirkverbindung steht und der Antriebsriemen (27) als Hauptantriebsriemen (28) ausgebildet ist und die Arbeitsorgane (20) der landwirtschaftlichen Arbeitsmaschine (1, 2) über diesen Hauptantriebsriemen (28) angetrieben werden, Dies hat insbesondere den Effekt, dass die landwirtschaftliche Arbeitsmaschine (1, 2) über ein einfach strukturiertes, leicht zugängliches und von Bodenunebenheiten relativ unabhängiges Antriebskonzeptes verfügt.

## Beschreibung

Die Erfindung betrifft ein Antriebssystem einer landwirtschaftlichen Arbeitsmaschine nach dem Oberbegriff des Anspruchs 1.

Aus dem Stand der Technik ist gemäß der DE 196 06 388 eine als Feldhäcksler ausgeführte landwirtschaftliche Arbeitsmaschine bekannt geworden, die in ihrem frontseitigen Bereich ein sogenanntes Feidfutterschneidwerk aufnimmt, welches das geschnittene Erntegut zusammenführt und einem nachgeordneten Querförderorgan zuführt. Das Querförderorgan übergibt das Erntegut einer Einzugs- und Vorpresswalzenelnheit, die das Erntegut an die Häckseltrommel übergibt. Im rückwärtigen Bereich der Häckseltrommel wird das Erntegut von einer Nachzerkleinerungseinrichtung, einem sogenannten Korncracker, feinzerkleinert und an einen Nachbeschleuniger übergeben. Der Nachbeschleuniger übernimmt das zerkleinerte Erntegut und fördert dieses über einen annähernd senkrechten Auswurfkanal und einen diesem nachgeordneten verdreh- und verschwenkbaren Auswurfkrümmer einem nicht dargestellten Überladefahrzeug zu.

In an sich bekannter Weise verfügt der Feldhäcksler über einen Antriebsmotor, der über einen ersten Riemenantrieb den Nachbeschleuniger antreibt, zugleich ist ein weiterer Riemenantrieb vorgesehen, der von dem Nachbeschleuniger über verschiedene Zwischenantriebe die Häckseltrommel und die Nachzerkleinerungseinrichtung antreibt Im Riemenantrieb des Nachbeschleunigers ist zugleich eine Antriebsscheibe zur Abzweigung von Antriebsenergie zum Vorsatzgerät des Feldhäckslers vorgesehen. Wegen der Vielzahl von Riemenantrieben muss die Antriebseinheit des Vorsatzgerätes in einem bodennahen Bereich des Feldhäckslerrahmens angeordnet sein. Zugleich verlangt diese Anordnung, dass die Energieübertragung zum Vorsatzgerät, im dargestellten Ausführungsbeispiel eine Gelenkwelle, unterhalb der Vorderachse positioniert ist.

Derartige Antriebssystemstrukturen haben vor allem den Nachteil, dass sie wegen ihres geringen Abstandes zum Untergrund sehr empfindlich auf Bodenunebenheiten reagieren. Insbesondere können auf dem Boden liegende Hindernisse schwere Beschädigungen an den Antriebsorganen hervorrufen, Zudem führt die Vielzahl der Antriebsriemen und den ihnen zugeordneten Umlenk- und Spannelementen zu teuren und bauraumintensiven Antriebskonzepten. Weiter schränkt die Vielzahl der Bauteilen deren Zugänglichkeit für Wartungs- und Reparaturarbeiten erheblich ein,

Eine ähnlich nachteilige Ausführung ist auch aus der EP 1 151 660 bekannt geworden, in der die Getriebeeinheit zum Antrieb des Vorsatzgerätes und der Einzugs- und Vorpresswalzen untenseitig dem Chassis des Feldhäckslers in einer extrem bodennahen Position zugeordnet ist.

Es ist deshalb Aufgabe der Erfindung die beschriebenen Nachteile des Standes der Technik zu vermeiden und insbesondere eine einfach strukturierte, leicht zugängliche und von Bodenunebenheiten unabhängigen Lage eines Antriebskonzeptes vorzuschlagen.

Diese Aufgabe wird erfindungsgemäß durch die kennzeichnenden Merkmale des Anspruchs 1 gelöst.

Indem das Antriebssystem einer landwirtschaftlichen Arbeitsmaschine, insbesondere eines selbstfahrenden Feldhäckslers zumindest einen als Hauptantriebsriemen ausgeführten Antriebsriemen umfasst und wobei die Arbeitsorgane der landwirtschaftlichen Arbeitsmaschine über den Hauptantriebsriemen angetrieben werden, ist sichergestellt, dass die landwirtschaftliche Arbeitsmaschine über ein einfach strukturiertes, leicht zugängliches und von Bodenunebenheiten relativ unabhängiges Antriebskonzeptes verfügt.

In einer vorteilhaften Ausgestaltung der Erfindung umfassen die von dem Hauptantriebsriemen angetriebenen Arbeitsorgane zumindest die Einzugsorgane, das Häckselorgan, das Nachbeschleunigungsorgan und eine Nachzerkleinerungseinrichtung, sodass mit einem einzigen Hauptantriebsstrang sämtliche Arbeitsorgane des Feldhäckslers antreibbar sind. Auf diese Weise verringert sich der für das Antriebskonzept erfoderlicher Bauraumbedarf gegenüber herkömmlichen Ausführungen erheblich. Zudem reduzieren sich wegen der geringeren Anzahl an Bauteilen auch die Kosten für eine solche Antriebsstruktur.

Eine vorteilhafte Weiterbildung der Erfindung ergibt sich dann, wenn sich das Zugtrum des Hauptantriebsriemens zwischen dem Antrieb des Häckslerorgans und der Abtriebsriemenscheibe des Antriebsmotors erstreckt und die Antriebe der weiteren Arbestsorgane in den Leertrum integriert sind und der Leertrum in vertikaler Richtung oberhalb des Zugtrums angeordnet ist. Auf diese Weise wird eine hinreichende Bodenfreiheit realisiert, sodass Beschädigungen des Antriebssystems bei Bodenunebenheiten und Hindernisse auf dem Boden deutlich reduziert oder gänzlich vermieden wird.

Indem weiter das Antriebssystem der Einzugsorgane in einem der Vorderachse der landwirtschaftlichen Arbeitsmaschine nachgeordneten Bereich und zumindest teilweise in einem zwischen Zugtrum und Leertrum des Hauptantriebsriemens aufgespannten Bereich angeordnet ist, kann zudem die Zugänglichkeit zu den Einzugsorganen erheblich verbessert werden, da nunmehr die Anzahl der Antriebselemente in diesem vorderen Bereich deutlich reduzierbar ist.

In einer vorteilhaften Ausgestaltung der Erfindung kann das Antriebssystem der Einzugsorgane als stufenloser Antrieb ausgebildet sein, sodass durch die Variation der Einzugsgeschwindigkeit in an sich bekannter Weise eine Anpassung der durch das Häckselorgan realisierbaren Schnittlänge vorgenommen werden kann.

Eine konstruktiv aufwendigerer aber technisch bewährte Ausführung des stufenlosen Antriebs ergibt sich dann, wenn dieser von einer hydromechanischen Getriebeeinheit gebildet wird.

Eine besonders kompakte Bauweise der hydromechanischen Getriebeeinheit ergibt sich dann, wenn diese eine von dem Hauptantriebsriemen angetriebene Hydropumpe und einen mit der Hydropumpe gekoppelten Hydromotor zum Antrieb der mechanischen Getriebeeinheit umfasst und wobei Hydromotor und Hydropumpe über ein eine Steuerventilanordnung umfassendes Rohrleltungssystem gekoppelt sind.

Um den Wirkungsgrad des hydraulischen Kreises einer hydromechanischen Getriebeeinheit zu erhöhen und dennoch einen Schnell- und Langsamlauf der Einzugsorgane zu ermöglichen ist in einer vorteilhaften Weiterbildung der Erfindung vorgesehen, dass die mechanische Getriebeeinheit zumindest zwei Gangstufen umfasst, sodass die Hydropumpe sowie der Hydromotor stets mit hoher Drehzahl umlaufen können.

Damit Wartungs- oder Einstellarbeiten an der hydraulischen Stufe schnell und einfach möglich sind ist in einer weiteren vorteilhaften Ausgestaltung vorgesehen, dass zumindest die Steuerventilanordnung außerhalb des Hauptantriebsriemens in einem obenseitigen Bereich angeordnete und mittels einer verschließbaren Zugangsöffnung freilegbar ist

In einer weiteren vorteilhaften Ausgestaltung der Erfindung ist der stufenlose Antrieb der Einzugsorgane als Variatorgetriebe ausgebildet, sodass eine hohe Funktionssicherheit bei gleichzeitig einfachem, bauraumsparendem und kostengünstigem Aufbau erreicht wird.

Indem der Hauptantriebsriemen im Leertrum alternierend einen Abtrieb für den Antrieb der Arbeitsorgans und eine Spannrolle einer Spanneinrichtung wenigstens teilweise umschlingt wird sichergestellt, dass auf sehr engem Bauraum eine Vielzahl von Abtrieben für die Arbeitsorgane der landwirtschaftlichen Arbeitsmaschine angeordnet werden können. Dies hat insbesondere den Vorteil, dass durch die kompakte Bauweise Bauteile eingespart werden und die Zugänglichkeit zu den verbleibenden Antriebsorganen verbessert wird.

Eine besonders bauraumsparende Anordnung des Antriebsstranges für die Einzugsorgane ergibt sich nach einer vorteilhaften Ausgestaltung der Erfindung dann, wenn die Einzugsorgane als paarweise zusammenwirkende Einzugs- und Vorpresswalzen ausgebildet sind und diesen Einzugs- und Vorpresswalzen ein Verteilgetriebe zugeordnet ist welches über wenigstens eine Gelenkwellenverbindung mit dem stufenlosen Antrieb der Einzugsorgane gekoppelt ist. In analoger Weise ergibt sich eine kompakte Struktur des Antriebes, wenn der Antrieb des Vorsatzgerätes durch den Antrieb des Häckselorgans geführt wird und über diesen mit dem Hauptantriebsriemen gekoppelt ist.

In einer vorteilhaften Weiterbildung der Erfindung ist dem Häckselorgan eine Nachzerkleinerungseinrichtung zugeordnet und wobei der Antrieb der Nachzerkleinerungseinrichtung über eine mit der Antriebswelle des Nachbeschleunigers gekoppelte Abtriebsstufe erfolgt, sodass sich auch hierdurch eine kompakte Bauweise des Antriebsstranges insgesamt ergibt.

Indem zumindest eine Spanneinrichtung von einer Koppelung einer Spannrolle und einer Leitrolle gebildet wird, wird sichergestellt, dass der Antriebsstrang insgesamt hohe Drehmoment und damit hohe Antriebsleistungen übertragen kann, da die Funktionstrennung von Form- und Kraftschluss eine sicherere Führung des Hauptantriebsriemens ermöglicht.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: die schematische Ansicht des erfindungsgemäßen Antriebssystems einer landwirtschaftlichen Arbeitsmaschine am Beispiel eines Feldhäckslers
- Figur 2: eine Detailseitenansicht des erfindungsgemäßen Antriebssystems
- Figur 3: eine Detaildraufsicht des erfindungsgemäßen Antriebssystems
- Figur 4: eine Detailansicht der als hydromechanisches Getriebe ausgeführten stufenlos arbeitenden Getriebeeinheit
- Figur 5: eine Detailansicht der als Variatorgetriebe ausgeführten stufenlos arbeitenden Getriebeeinheit

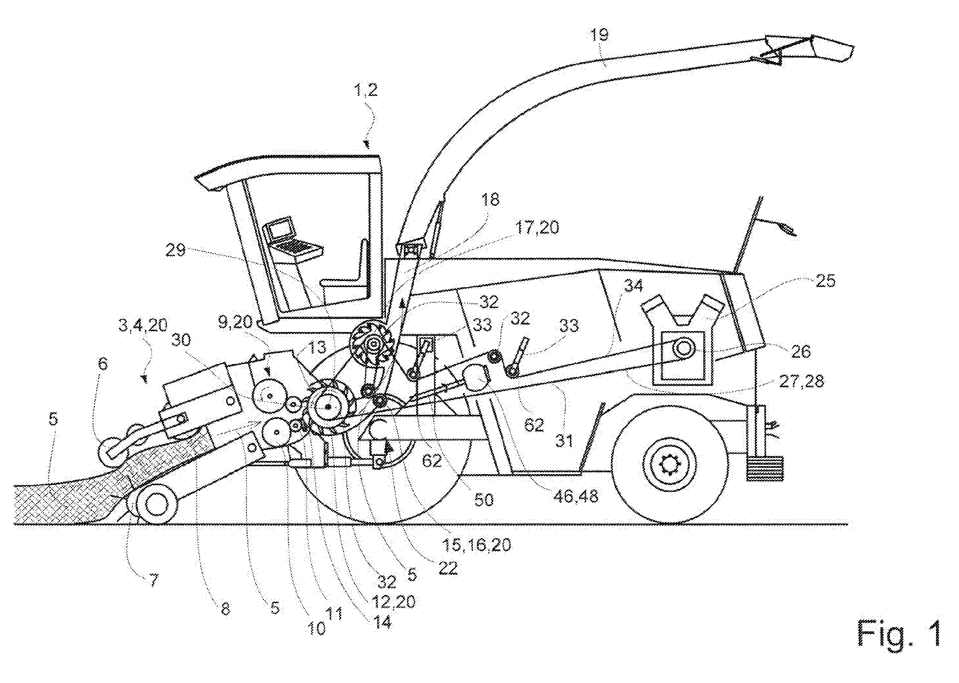

Fig. 1 zeigt eine als Feldhäcksler 2 ausgeführte landwirtschaftliche Arbeitsmaschine 1, die in ihrem frontseitigen Bereich ein als Pick-up 4 ausgeführtes Vorsatzgerät 3 aufnimmt. Die Pick-up 4 ist so gestaltet, dass sie einen Erntegutstrang 5 zwischen einer Niederhaltereinrichtung 6 und einer Aufsammeltrommel 7 aufnimmt und im rückwärtigen Bereich der Pick-up 4 einer Querförderschnecke 8 zuführt. Die Querförderschnecke 8 übergibt das Erntegut 5 nahezu mittig der Pick-up 4 nachgeordneten Einzugsorganen 9. Im dargestellten Ausführungsbeispiel werden die Einzugsorgane 9 von paarweise angeordneten Einzugswalzen 10 und diesen nachgeordneten Vorpresswalzen 11 gebildet Nachdem der Erntegutstrang 5 die Einzugsorgane 9 passiert hat, wird er in deren rückwärtigen Bereich an eine Häckseltrommel 12 übergeben. Die Häckseltrommel 12 nimmt an ihrem Umfang eine Vielzahl von Häckselmessern 13 auf, die den Erntegutstrang 5 im Zusammenwirken mit einer Gegenschneide 14 zerkleinert. Durch die kinetische Energie der umlaufenden Häckseltrommel 12 tritt der Erntegutstrang 5 im rückwärtigen Bereich der Häckseltrommel 12 mit hoher Geschwindigkeit aus dieser aus und wird an paarweise angeordnete Crackerwalzen 15 übergeben. Die Crackerwalzen 15 bilden dabei eine sogenannte Nachzerkleinerungseinrichtung 16. Nachdem der Erntegutstrang 5 die Nachzerkleinerungseinrichtung 16 passiert hat, gelangt er in den Wirkbereich eines Nachbeschleunigers 17. Der Nachbeschleuniger 17 prägt dem Erntegutstrang 5 in an sich bekannter Weise zusätzliche kinetische Energie auf, mittels derer der Erntegutstrang 5 über einen in vertikaler Richtung weisenden Auswurtschacht 18 und einen diesem nachgeordneten schwenk- und drehbeweglichen Auswurfkrümmer 19 aus dem Feldhäcksler 2 herausgefördert wird. Im dargestellten Ausführungsbeispiel bilden das Vorsatzgerät 3, die Einzugsorgane 9, die Häckseltrommel 12, die Nachzerkleinerungseinrichtung 16, sowie der Nachbeschleuniger 17 die erfindungsgemäßen Arbeitsorgane 20 der landwirtschaftlichen Arbeitsmaschine 1.

Weiter ist dem Feldhäcksler 2 zumindest ein Antriebsmotor 25 zugeordnet, dessen abtriebsseitige Riemenscheibe 26 von einem Antriebsriemen 27 umschlungen wird. Der Antriebsriemen 27 bildet in erfindungsgemäßer Weise einen Hauptantriebsriemen 28. Im dargestellten Ausführungsbeispiel erstreckt sich der Hauptantriebsriemen 28 zwischen der abtriebsseitigen Riemenscheibe 26 des Antriebsmotors 25 und einer der Antriebswelle 29 der Häckseltrommel 12 zugeordneten Riemenscheibe 30, Während sich das sogenannte Zugtrum 31 unmittelbar zwischen der Häckseltrommel 12 und der Riemenscheibe 26 des Antriebsmotors 25 erstreckt und frei von weiteren energieabgreifenden Elementen ist, sind die weiteren im folgenden noch näher zu beschreibenden Abtriebe 32 und Spanneinrichtungen 33 in dem sogenannten Leertrum 34 angeordnet. Im dargestellten Ausführungsbeispiel liegt die, die Häckseltrommel 12 mit Antriebsenergie versorgende Riemenscheibe 30 in vertikaler Richtung tiefer als die dem Antriebsmotor 25 zugeordnete Riemenscheibe 26.

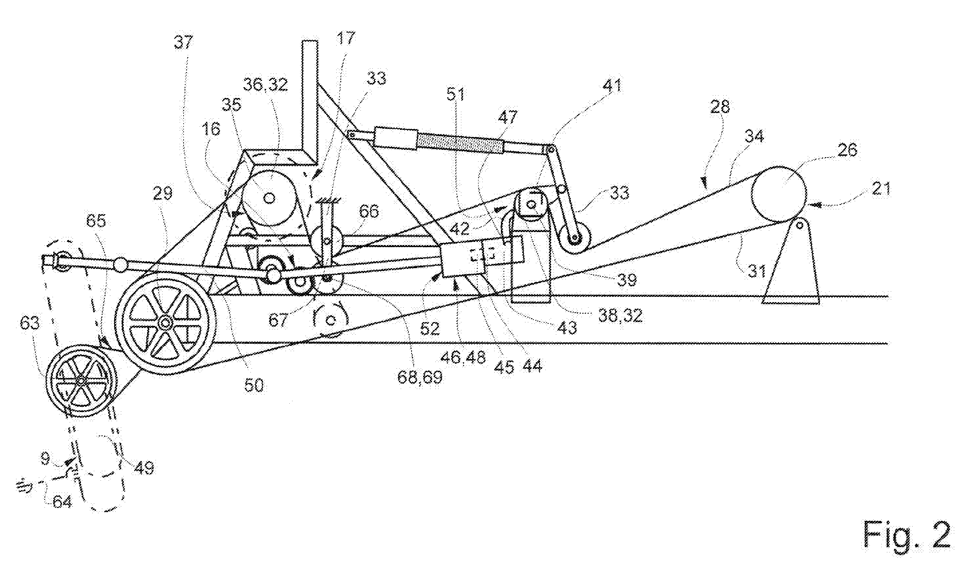

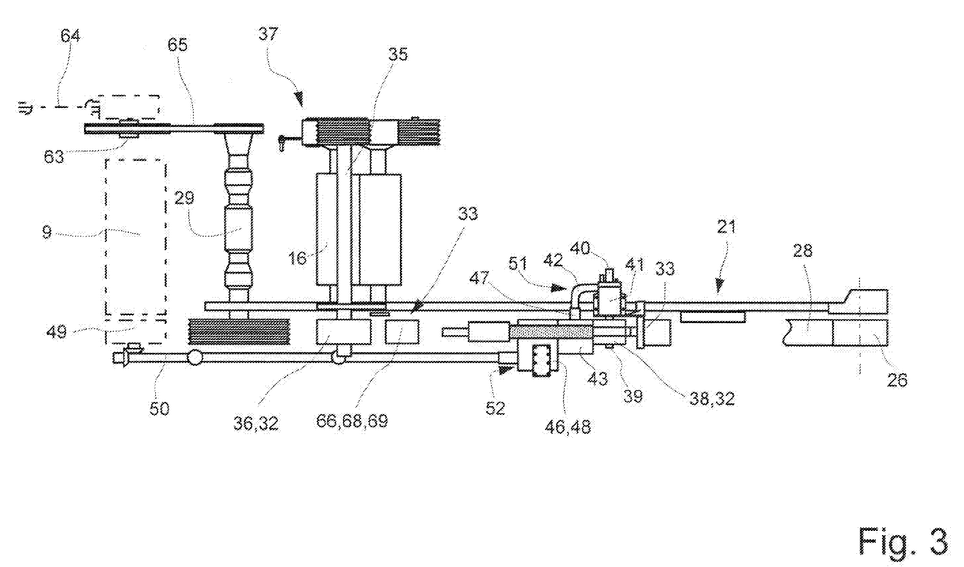

Gemäß den Figuren 2 und 3 ist in einer vertikal höchsten Position auf der Nachbeschleunigerwelle 35 eine Riemenscheibe 36 angeordnet, die zumindest teilweise von dem Hauptantriebsriemen 28 umschlungen wird. In an sich bekannter Weise ist der Nachbeschleunigerwelle 35 einenends eine Getriebestufe 37 zugeordnet, mittels derer die Nachzerkleinerungseinrichtung 16 angetrieben wird. Auf diese Weise wird mittels der Riemenscheibe 36 zugleich der Nachbeschleuniger 17 und die Nachzerkleinerungseinrichtung 16 angetrieben, sodass diese Riemenscheibe 36 einen der dem Hautantriebsriemen zugeordneten Abtriebe 32 bildet. In vertikaler Richtung zwischen der Position, der dem Antriebsmotor 25 zugeordneten Riemenscheibe 26 und der Nachbeschleunigerwelle 35 zugeordneten Riemenscheibe 30 und in Längsrichtung des Feldhäcksler 2 etwa mittig zwischen beiden ist dem Hauptantriebsriemen 28 eine weitere Riemenscheibe 38 zugeordnet. Diese Riemenscheibe 38 wird von einer Abtriebswelle 39 durchsetzt, die einenends mit der Antriebswelle 40 einer Hydropumpe 41 gekoppelt ist. Abtriebsseitig ist der Hydropumpe 41 ein Rohrleitungssystem 42 zugeordnet. Das Rohrleitungssystem 42 mündet anderenends in einen Hydromotor 43, dessen Abtriebswelle 44 mit der Eingangswelle 45 einer noch näher zu beschreibenden Getriebeeinheit 46 gekoppelt ist. Zugleich ist in das Rohrleitungssystem 42 eine Steuerventilanordnung 47 integriert, die einen Druckölstromaustausch zwischen der Hydropumpe 41 und dem Hydromotor 43 steuert und zwar in der Weise, dass die Steuerventilanordnung den Ölstrom zwischen Hydropumpe 41 und Hydromotor 43 unterbrechen kann, sodass die Einzugsorgane 9 schlagartig zum Stillstand kommen. In an sich bekannter Weise wird diese Funktion im Zusammenhang mit sogenannten Fremdkörperdetektoren benötigt, da in an sich bekannter Weise auf deren Detektion von Fremdkörpern die Einzugsorgane 9 anstoppt werden, damit die sensierten Fremdkörper nicht in die weiteren Arbeitsorgane des Feldhäckslers 2 gelangen, Es liegt im Rahmen der Erfindung, dass die Steuerung der Druckölströme In an sich bekannter Weise selbsttätig oder durch den Betreiber des Feldhäcklsers 2 gezielt vorgenommen werden kann.

Die Getriebeeinheit 46 bildet das erfindungsgemäße Antriebssystem 48 zum Antrieb der Einzugsorgsne 9, wobei in an sich bekannter Weise den Einzugsorganen 9 ein sogenanntes Verteilgetriebe 49 zugeordnet ist und zwischen dem Verteilgetriebe 49 und der Antriebseinheit 48 zumindest eine Gelenkwelle 50 zur Übertragung der Antriebsenergie zwischengeschaltet ist. In erfindungsgemäßer Weise ist die die Antriebseinheit 48 bildende Getriebeeinheit 46 zumindest teilweise in einem Bereich angeordnet, der in vertikaler Richtung durch das Zugtrum 31 und das Leertrum 34 des Hauptantriebsriemens 28 begrenzt wird und zudem im rückwärtigen Bereich der in Figur 1 dargestellten Vorderachse 22 liegt Indem der Antriebseinheit 48 der Einzugsorgane 9 eine aus der Hydropumpe 41 und dem Hydromotor 43 bestehende hydraulische Einheit 51 zugeordnet ist, kann die Drehzahl der Einzugsorgane 9 stufenlos eingestellt werden, In erfindungsgemäßer Weise bildet die hydraulische Einheit 51 und die Getriebeeinheit 46 die hydromechanische Getriebeeinheit 52. Damit der Wirkungsgrad der hydraulischen Einheit 51 möglichst hoch ist, ist die Getriebeeinheit 46 in zumindest zwei Gangstufen betreibbar. Dies hat den Vorteil, dass auch bei niedriger Umlaufgeschwindigkeit der Einzugsorgane 9 die Hydropumpe 41 und der Hydromotor 43 mit hoher Drehzahl betrieben werden können, Gemäß den vorherigen Ausführungen bildet die Riemenscheibe 38 zugleich einem mit dem Hauptantriebsriemen 28 zusammenwirkenden erfindungsgemäßen Abtrieb 32.

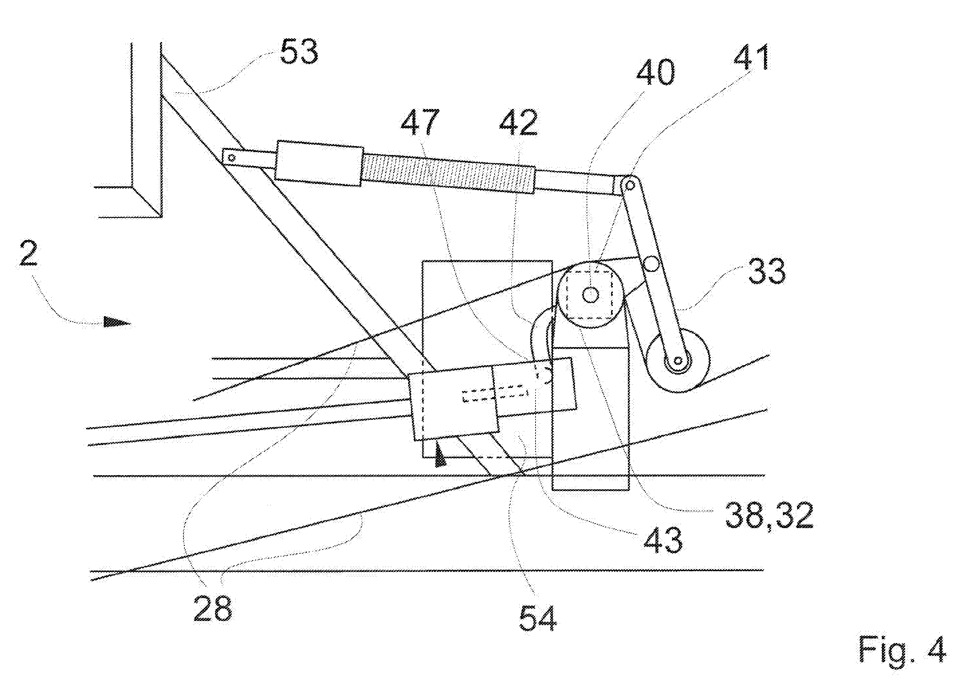

In einer vorteilhaften Ausgestaltung der Erfindung sind der Hydropumpe 41, der Hydromotor 43 und das sie verbindende Rohrleitungssystem 42 mit der darin integrierten Steuereinrichtung 47 dem Hauptantriebsriemen 28 gemäß Figur 4 so zugeordnet, dass sie quer zur Längsrichtung des Feldhäcksters 2 gesehen den Hauptantriebsriemen 28 seitlich überragen. In diesem Bereich ist dem Chassis 53 des Feldhäckslers 2 eine in Figur 4 nur schematisch angedeutete verschließbare Zugangsöffnung 54 zugeordnet, bei deren Öffnung zumindest die Steuerventilanordnung 47 erreichbar ist. Es liegt im Rahmen der Erfindung, dass die Zugangsöffnung 54 so dimensioniert ist, dass neben der Steuerventilanordnung 47 auch die Hydropumpe 41 und der Hydromotor 43 zugänglich sind.

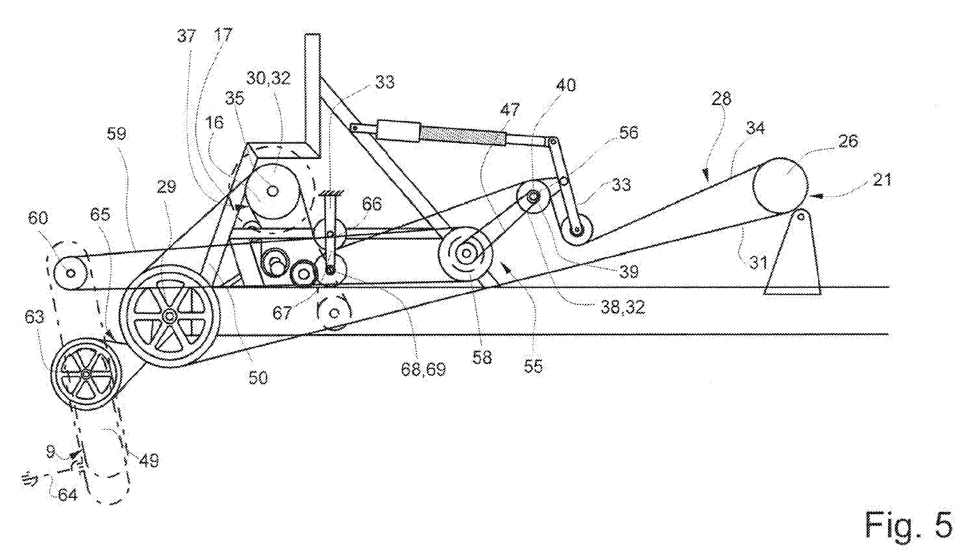

In einer in Figur 5 dargestellten vorteilhaften Ausgestaltung der Erfindung, kann die den stufenlosen Antrieb der Einzugsorgane 9 ermöglichende hydromechanische Getriebeeinheit 52 durch ein Variatorgetriebe 55 ersetzt sein. Im dargestellten Ausführungsbeispiel ist der Abtriebswelle 39, die in der zuvor beschriebenen Ausführungsform die stufenlos arbeitende Getriebeeinheit 52 antrieb, eine weitere Riemenscheibe 56 zugeordnet, die über einen Antriebsriemen 57 einen Variator 58 antreibt, wobei dieser über einen Variatorriemen 59 mit dem Verteilgetriebe 49 der Einzugsorgane 9 gekoppelt ist. Im einfachsten Fall wird die Koppelung dadurch erreicht, dass der Getriebeeingangswelle 60 eine weitere Riemenscheibe 61 zugeordnet ist, die von dem Variatorriemen 59 umschlungen wird.

Zudem ergibt sich eine optimale Führung des Hauptantriebsriemens 28 dann, wenn, wie in Figur 1 dargestellt, in dem Leertrum 34 alternierend die Abtriebe 32 der Arbeitsorgane 20 und die Spannrollen 62 der Spanneinrichtungen 33 angeordnet sind, wobei der Hauptantriebsriemen 28 diese wenigstens teilweise umschlingt.

Weiter ist das Antriebssystem 21 des Feldhäckslers 2 gemäß Figur 3 so ausgeführt, dass der Antriebswelle 29 der Häckseltrommel 12 ein Vorsatzgetriebe 63 zugeordnet ist, welches über geeignete Energieübertragungsmittel, im einfachsten Fall Gelenkwellen 64, mit dem nicht dargestellten Getriebeeingang des Vorsatzgerätes 3 gekoppelt ist und somit den Antrieb 65 des Vorsatzgerätes 3 bildet. Weiter liegt es im Rahmen der Erfindung, dass unter dem Gesichtspunkt der Übertragung hoher Antriebsenergien und einer sicheren formschlüssigen Führung des Hauptantriebsriemens 28 zumindest eine der Spanneinrichtungen 33 so ausgebildet sein kann, dass sie eine erste Spannrolle 66 aufweist, deren Druckbeaufschlagung oder entlastung ausschließlich zum Spannen des Hauptantriebsriemens 28 führt, während die dieser Spannrolle 66 über einen Koppelmechanismus 67 zugeordnete weitere als Leitrolle 69 ausgeführte Spannrolle 68 durch eine geeignete Profilierung eine formschlüssige Führung des Hauptantriebsriemens 28 bewirkt.

Es liegt im Rahmen des Könnens eines Fachmanns die beschriebene Vorrichtung in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichenliste :

- 1: landwirtschaftliche Arbeitsmaschine
- 2: Feldhäcksler
- 3: Vorsatzgerät
- 4: Pick-up
- 5: Erntegutstrang
- 6: Niederhaltereinrichtung
- 7: Aufsammeltrommel
- 8: Querförderschnecke
- 9: Einzugsorgane
- 10: Einzugswalze
- 11: Vorpresswalze
- 12: Häckseltrommel
- 13: Häckselmesser
- 14: Gegenschneide
- 15: Crackerwalze
- 16: Nachzerkleinerungseinrichtung
- 17: Nachbeschleuniger
- 18: Auswurfschacht
- 19: Auswurfkrümmer
- 20: Arbeitsorgane
- 21: Antriebssystem
- 22: Vorderachse
- 25: Antriebsmotor
- 26: Riemenscheibe
- 27: Antriebsriemen
- 28: Hauptantriebsriemen
- 29: Antriebswelle
- 30: Riemenscheibe
- 3 1: Zugtrum
- 32: Abtrieb
- 33: Spanneinrichtung
- 34: Leertrum
- 35: Antriebswelle
- 36: Riemenscheibe
- 37: Getriebestufe
- 38: Riemenscheibe
- 39: Abtriebswelle
- 40: Antriebswelle
- 41: Hydropumpe
- 42: Rohrleitungssystem
- 43: Hydromotor
- 44: Abtriebswelle
- 45: Eingangswelle
- 46: Getriebeeinheit
- 47: Steuerventilanordnung
- 48: Antriebssystem
- 49: Verteilgetriebe
- 50: Gelenkwelle
- 51: hydraulische Einheit
- 52: Hydro-mechanische Getriebeeinheit
- 53: Chassis
- 54: Zugangsöffnung
- 55: Variatorgetriebe
- 56: Riemenscheibe
- 57: Antriebsriemen
- 58: Variator
- 59: Variatorriemen
- 60: Getriebeeingangswelle
- 61: Riemenscheibe
- 62: Spannrolle
- 63: Vorsatzgetriebe
- 64: Gelenkwellen
- 65: Antrieb
- 66: Spannrolle
- 67: Koppelmechanismus
- 68: Spannrolle
- 69: Leitrolle

## Patentansprüche

1. Antriebssystem einer landwirtschaftlichen Arbeitsmaschine, insbesondere eines selbstfahrenden Feldhäckslers zur Aufnahmen und zum Häckseln von Erntegut, wobei dem Feldhäcksler zumindest ein Vorsatzgerät zur Aufnahme des Erntegutes zugeordnet ist und diesem nachgeordnete als Einzugsorgane ausgebildet Arbeitsorgane das Erntegut wenigstens einem als Häckseleinrichtung ausgebildeten Arbeitsorgan zuführen und wobei der Antriebsmotor der landwirtschaftlichen Arbeitsmaschine mit einem Antriebsriemen in Wirkverbindung steht,
**dadurch gekennzeichnet,**
**dass** der Antriebsriemen (27) als Hauptantriebsnemen (28) ausgebildet ist und die Arbeitsorgane (20) der landwirtschaftlichen Arbeitsmaschine (1, 2) über den Hauptantriebsriemen (28) angetrieben werden.

2. Antriebssystem einer landwirtschaftlichen Arbeitsmaschine nach Anspruch 1,
**dadurch gekennzeichnet,**
**dass** die von dem Hauptantriebsriemen (28) angetriebenen Arbeitsorgane (20) zumindest die Einzugsorgane (9), das Häckselorgan (12), das Nachbeschleunigungsorgan (17) und eine Nachzerkleinerungseinrichtung (16) umfassen.

3. Antriebssystem einer landwirtschaftlichen Arbeitsmaschine nach einem der vorgeordneten Ansprüche,
**dadurch gekennzeichnet,**
**dass** sich das Zugtrum (31) des Hauptantriebsriemens (28) zwischen dem Antrieb (29, 30, 32) des Häcksletorgans (12) und der Abtriebsriemenscheibe (26) des Antriebsmotors (25) erstreckt und die Antriebe (32) der weiteren Arbeitsorgane (20, 3, 9,16, 17) in den Leertrum (34) integriert sind.

4. Antriebssystem einer landwirtschaftlichen Arbeitsmaschine nach einem der vorgeordneten Ansprüche,
**dadurch gekennzeichnet,**
**dass** das Antriebssystem (21) der Einzugsorgane (9) in einem der Vorderachse (22) der landwirtschaftlichen Arbeitsmaschine (1, 2) nachgeordneten Bereich und zumindest teilweise in einem zwischen Zugtrum (31) und Leertrum (34) des Hauptantriebsriemens (28) aufgespannten Bereich angeordnet ist.

5. Antriebssystem einer landwirtschaftlichen Arbeitsmaschine nach Anspruch 4,
**dadurch gekennzeichnet,**
**dass** das Antriebssystem (48) der Einzugsorgane (9) einen stufenlosen Antrieb (52, 55) umfasst.

6. Antriebssystem einer landwirtschaftlichen Arbeitsmaschine nach Anspruch 5,
**dadurch gekennzeichnet,**
**dass** der stufenlose Antrieb von einer hydromechanischen Getriebeeinheit (52) gebildet wird.

7. Antriebssystem einer landwirtschaftlichen Arbeitsmaschine nach Anspruch 6,
**dadurch gekennzeichnet,**
**dass** die hydromechanische Getriebeeinheit (52) eine von dem Hauptantriebsriemen (28) angetriebene Hydropumpe (41) und einen mit der Hydropumpe (41) gekoppelten Hydromotor (43) zum Antrieb der mechanischen Getriebeeinheit (46) umfasst und wobei Hydromotor (43) und Hydropumpe (41) über ein eine Steuerventilanordnung (47) umfassendes Rohrleitungssystem (42) gekoppelt sind.

8. Antriebssystem einer landwirtschaftlichen Arbeitsmaschine nach Anspruch 7,
**dadurch gekennzeichnet,**
**dass** die mechanische Getriebeeinheit (46) zumindest zwei Gangstufen umfasst.

9. Antriebssystem einer landwirtschaftlichen Arbeitsmaschine nach Anspruch 7,
**dadurch gekennzeichnet,**
**dass** zumindest die Steuerventilanordnung (42) außerhalb des Hauptantriebsriemens (28) in einem obenseitigen Bereich angeordnete und mittels einer verschießbaren Zugangsöffnung (54) freilegbar ist.

10. Antriebssystem einer landwirtschaftlichen Arbeitsmaschine nach Anspruch 5,
**dadurch gekennzeichnet,**
**dass** der stufenlose Antrieb von einem Variatorgetriebe (55) gebildet wird,

11. Antriebssystem einer landwirtschaftlichen Arbeitsmaschine nach einem der vorgeordneten Ansprüche,
**dadurch gekennzeichnet,**
**dass** der Hauptantriebsriemen (28) im Leertrum (34) alternierend einen Abtrieb (32) für den Antrieb der Arbeitsorgans (20) und eine Spannrolle (66, 68) einer Spanneinrichtung (33) wenigstens teilweise umschlingt

12. Antriebssystem einer landwirtschaftlichen Arbeitsmaschine nach einem der vorgeordneten Ansprüche,
**dadurch gekennzeichnet,**
**dass** die Einzugsorgane (9) als paarweise zusammenwirkende Einzugs- und Vorpresswalzen (10, 11) ausgebildet sind und diesen Einzugs- und Vorpresswalzen (10,11) ein Verteilgetriebe (49) zugeordnet ist welches über wenigstens eine Gelenkwellenverbindung (50) mit dem stufenlosen Antrieb (52, 55) der Einztigsorgane (9) gekoppelt ist.

13. Antriebssystem einer landwirtschaftlichen Arbeitsmaschine nach einem der vorgeordneten Ansprüche,
**dadurch gekennzeichnet,**
**dass** der Antrieb (63) des Vorsatzgerätes (3) durch den Antrieb (29, 30) des Häckselorgans (12) geführt wird und über diesen mit dem Hauptantriebsriemen (28) gekoppelt ist.

14. Antriebssystem einer landwirtschaftlichen Arbeitsmaschine nach einem der vorgeordneten Ansprüche,
**dadurch gekennzeichnet,**
**dass** dem Häckselorgan (12) eine Nachzerkleinerungseinrichtung (16) zugeordnet ist und der Antrieb der Nachzerkleinerungseinrichtung (16) über eine mit der Antriebswelle (35) des Nachbeschleunigers (17) gekoppelte Abtriebsstufe (37) erfolgt.

15. Antriebssystem einer landwirtschaftlichen Arbeitsmaschine nach einem der vorgeordneten Ansprüche,
**dadurch gekennzeichnet,**
**dass** zumindest eine Spanneinrichtung (33) von einer Koppelung einer Spannrolle (66) und einer Leitrolle (69) gebildet wird.
